(19) Europäisches Patentamt
European Patent Office
Office européen des brevets

(11) EP 0 336 669 B1

(12) EUROPEAN PATENT SPECIFICATION

(45) Date of publication and mention
of the grant of the patent:
**09.10.1996 Bulletin 1996/41**

(51) Int Cl.6: **H03H 17/06**

(21) Application number: **89303242.5**

(22) Date of filing: **03.04.1989**

(54) **Sampling frequency converter**

Abtastfrequenz-Konverter

Convertisseur de fréquence d'échantillonnage

(84) Designated Contracting States:
**DE FR GB NL**

(30) Priority: **08.04.1988 JP 86678/88**

(43) Date of publication of application:
**11.10.1989 Bulletin 1989/41**

(73) Proprietor: **SONY CORPORATION Tokyo 141 (JP)**

(72) Inventors:
• **Fujita, Tadao**
  **Shinagawa-ku Tokyo (JP)**
• **Takayama, Jun**
  **Shinagawa-ku Tokyo (JP)**
• **Ninomiya, Takeshi**
  **Shinagawa-ku Tokyo (JP)**
• **Kurose, Yoshikazu**
  **Shinagawa-ku Tokyo (JP)**
• **Inaba, Yoshiaki**
  **Shinagawa-ku Tokyo (JP)**

(74) Representative: **Ayers, Martyn Lewis Stanley et al**
**J.A. KEMP & CO.**
**14 South Square**
**Gray's Inn**
**London WC1R 5LX (GB)**

(56) References cited:
EP-A- 0 080 712        EP-A- 0 262 647
FR-A- 2 582 893        US-A- 4 460 890
US-A- 4 558 348

## Description

The present invention relates to a sampling frequency converter for converting a digital signal of a first sampling frequency into a digital signal of a second sampling frequency and, more particularly, to a sampling frequency converter adapted for use in conversion of the sampling rate or the like of a digital color video signal.

With regard to the formats of digital color video signal, there is known a 4:2:2 format which is also termed D-1 format and employs such digital component signal that a luminance signal Y has a sampling frequency $f_1$ of 13.5 MHz, while each of color difference signals R-Y and B-Y has a sampling frequency of 6.75 MHz equal to one half of the frequency $f_1$. In contrast therewith, a sampling frequency $f_2$ in the case of directly digitizing a composite color signal of NTSC format is set to an integral multiple of a color subcarrier frequency $f_{sc}$, e.g. $4f_{sc}$ ($\fallingdotseq 14.318$ MHz). Therefore, in execution of signal conversion between them, it is necessary to execute sampling frequency (sampling rate) conversion with regard to the two frequencies $f_1$ and $f_2$.

The R-Y and B-Y signals of the 4:2:2 format are both obtained by sampling at the frequency $f_1/2$; whereas the composite signal of the NTSC format is obtained by superposing, on the Y (luminance) signal, the carrier color signal produced by quadrature two-phase modulation of the color subcarrier with the I and Q signals. Therefore, when the signal produced by sampling such composite signal at the frequency $f_2$ ($= 4f_{sc}$) is color-decoded, the I and Q signal data are obtained alternately per period $1/f_2$ (per 90° of color subcarrier) as will be described later. That is, the decoded digital I and Q signals are such that the sampling frequency thereof is $f_2/2$ ($= 2f_{sc}$) and an offset corresponding to $1/f_2 = 1/4f_{sc}$ (90° phase of color subcarrier) is existent therebetween. Due to the difference between the sampling points of the I signal data and the Q signal data, it becomes necessary, in calculating the R-Y and B-Y signals from the I and Q signals by matrix operations, to execute interpolation for obtaining components coincident in timing with the I and Q signals before or after conversion of the sampling frequencies.

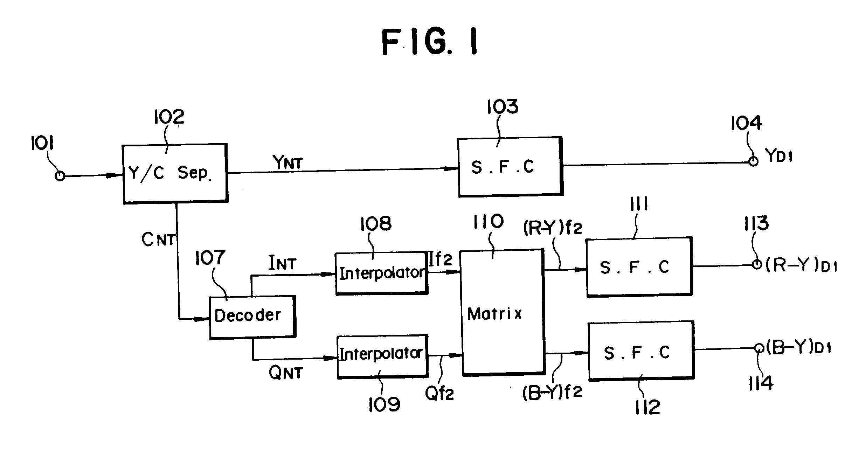

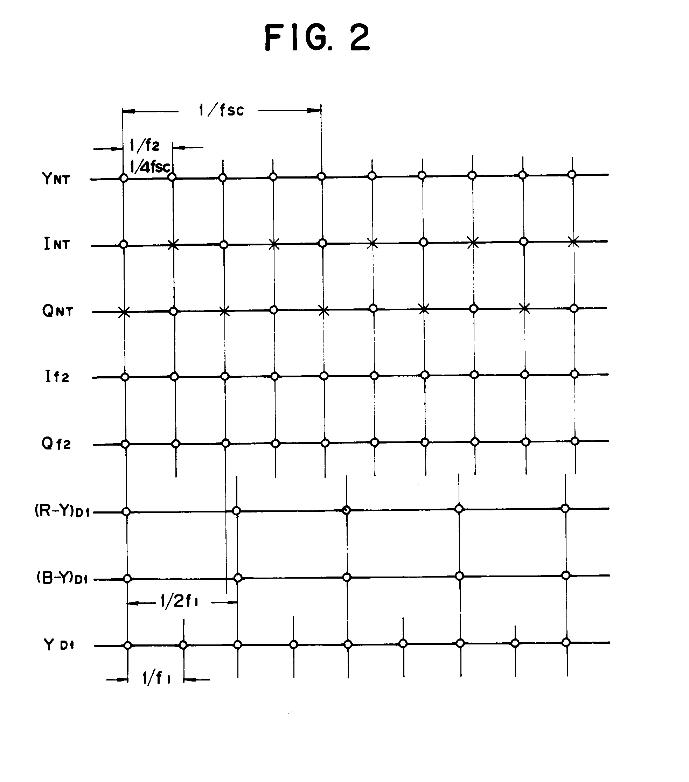

Fig. 1 shows an exemplary conversion apparatus designed for converting a digital component signal of the NTSC format into digital component signals of the 4:2:2 format (D-1 format). The NTSC-format digital composite signal (sampling frequency $f_2 = 4f_{sc}$) fed to an input terminal 101 in Fig. 1 is separated into a $Y_{NT}$ signal and a $C_{NT}$ signal (where the subscript NT denotes the NTSC format) by a digital Y/C separator. As shown in Fig. 2, the $Y_{NT}$ signal is composed of a sample data row having the aforementioned frequency $f_2$ ($= 4f_{sc}$) which corresponds to a $1/4f_{sc}$ period. The. $Y_{NT}$ signal is fed to a sampling frequency converter (sampling rate converter) 103 and is thereby converted into a luminance signal $Y_{D1}$ of the aforementioned D-1 standard sampling frequency $f_1$ ($= 13.5$ MHz). Such luminance signal $Y_{D1}$ is taken out from a Y output terminal 104. Meanwhile the $C_{NT}$ signal obtained from the Y/C separator 102 is fed to a decoder 107, which then outputs decoded digital $I_{NT}$ and $Q_{NT}$ signals therefrom. In this stage, the I signal and the Q signal are decoded in the following manner. The original analog carrier color signal C in the NTSC format is expressed as

$$C = I \cos (\omega_{sc} t + \phi) + Q \sin (\omega_{sc} t + \phi)$$

where $\omega_{sc} = 2 \pi f_{sc}$.

Supposing now that the phase (or the position on the time base) in sampling at the frequency $f_2$ ($= 4f_{sc}$) increases stepwise from 0 with a unitary angle of $\pi/2$ ($= 90°$) as 0, $\pi/2$, $\pi$ ... and so forth, then the digital carrier color signal $C_{NT}$ itself is changed as I, Q, -I, -Q and so forth per $1/4f_{sc}$. Therefore, in the decoder 107, the data row of the input color signal $C_{NT}$ is separated into I and Q per $1/4f_{sc}$ (with period $1/2f_{sc}$) while being sequentially multiplied by ±1, so that signals $I_{NT}$ and $Q_{NT}$ can be obtained as shown in Fig. 2. Each of such signals $I_{NT}$ and $Q_{NT}$ has the same sampling frequency $2f_{sc}$, and the time difference (offset) between the data of such signals is equal to $1/4f_{sc}$. Since it is impossible to execute a matrix calculation for obtaining R-Y, B-Y and so forth by the use of such I and Q signal data with different sampling points, the data at the sampling points (denoted by x on the signals $I_{NT}$ and $Q_{NT}$ in Fig. 2) of the other signals are interpolated by means of interpolators 108 and 109 to produce signals $I_{f2}$ and $Q_{f2}$ (shown in Fig. 2) having the same frequency $f_2$ ($= 4f_{sc}$) with mutually equal sampling points in regard to the sample data thereof. And then a matrix calculation is executed in a matrix calculator 110 in accordance with such signals $I_{f2}$ and $Q_{f2}$ to consequently produce signals $(R-Y)_{f2}$ and $(B-Y)_{f2}$ having the same sampling frequency $f_2$ ($= 4f_{sc}$). Such signals $(R-Y)_{f2}$ and $(B-Y)_{f2}$ are converted by sampling frequency converters 111 and 112 respectively into signals $(R-Y)_{D1}$ and $(B-Y)_{D1}$ at a mutually equal sampling frequency $f_1/2$ as shown in Fig. 2, and then are taken out from output terminals 113 and 114 respectively.

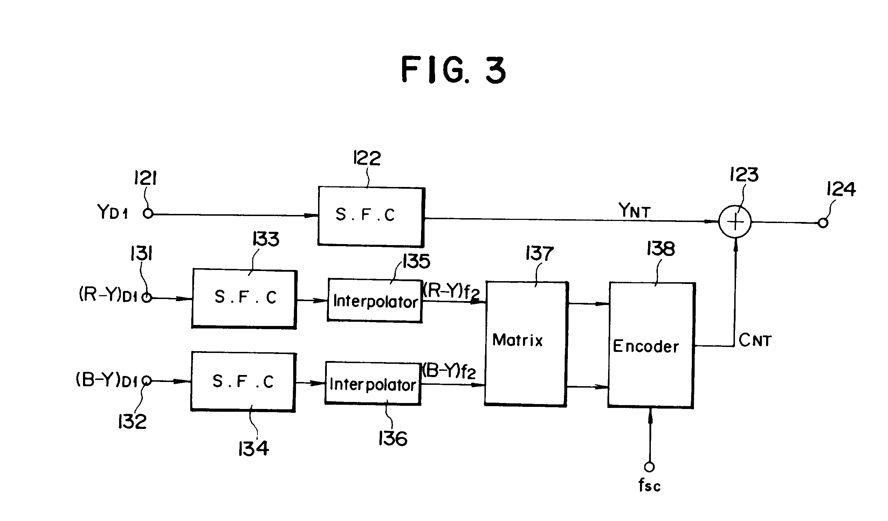

Fig. 3 shows an exemplary format conversion circuit which performs an inverse operation, with respect to the above, for converting a signal of the D-1 format (4:2:2 format) into a digital composite signal of the NTSC format. In this case, a signal $Y_{D1}$ fed to an input terminal 121 is supplied directly to a sampling frequency converter 122 where the frequency $f_1$ is converted into a frequency $f_2$, so that the signal $Y_{D1}$ is changed to a signal $Y_{NT}$ which is then sent to an adder 123. The color difference signals $(R-Y)_{D1}$ and $(B-Y)_{D1}$ supplied to input terminals 131 and 132 respectively are fed to sampling frequency converters 133 and 134 where the frequency $f_1/2$ is converted into a frequency $f_2/2$ ($= 2f_{sc}$) and then the frequency-converted signals are fed to interpolators 135 and 136 respectively so as to become signals $(R-Y)_{f2}$ and $(B-Y)_{f2}$ each having a sampling frequency $f_2$ ($=$

$4f_{sc}$). The signals $(R-Y)_{f2}$ and $(B-Y)_{f2}$ of a sampling frequency $4f_{sc}$ are then fed to a matrix calculator 137 so as to become signals $I_{f2}$ and $Q_{f2}$ of a sampling frequency $f_2$ (= $4f_{sc}$), which are fed to a modulator 138 where the signal of a frequency $f_{sc}$ is modulated to produce a digital carrier color signal $C_{NT}$. In this stage, an exemplary modulation is performed sequentially by substituting, in a repetition period $1/f_{sc}$, values (1, 0), (0, 1), (-1, 0) and (0, -1) per sampling period $1/4f_{sc}$ for the cosine value and the sine value in the afore-mentioned analog carrier color signal expressed as

$$C = I \cos (\omega_{sc} t + \phi) + Q \sin (\omega_{sc} t + \phi)$$

where $\omega_{sc} = 2 \pi f_{sc}$.
The result of such modulation represents that the I signal data and the Q signal data appear alternately per sampling period $1/4f_{sc}$. The digital carrier color signal $C_{NT}$ of the sampling frequency $4f_{sc}$ thus obtained is then fed to an adder 123 and is thereby superposed on the digital luminance signal $Y_{NT}$, so that an NTSC digital composite signal of the samplinf frequency $4f_{sc}$ is taken out from an output terminal 124.

In the format conversion apparatus of the above-described constitution, both interpolators and sampling frequency converters are required to consequently raise problems that the characteristic is somewhat deteriorated in each signal processing stage and the circuit configuration is complicated.

In such constitution of the format conversion apparatus mentioned above, when a composite signal of the NTSC format is converted into component signals of the 4:2:2 format as shown in Fig. 1, the filter characteristics for the sampling frequency conversion are mutually different since the respective frequency characteristics of the circuits for the luminance signal $Y_{NT}$ and the chrominance signal $C_{NT}$ are different from each other, hence causing a discrepancy between the group delays of the luminance signal and the chrominance signal.

Meanwhile in the chrominance signal line where the decoder 107, interpolators 108, 109 and so forth are inserted, the time required for processing the signal therein is rendered longer than that in the luminance signal line, so that a further difference is induced between the respective group delay characteristics. The error caused in correcting the discrepancy between the group delays of the two signals by an ordinary sample delay method or the like is maximally $\pm T_1/2$ (about 37 ns) when the sampling period on the output side (4:2:2 format) is set to $T_1$ (= $1/f_1$, about 74 ns since $f_1$ = 13.5 MHz). Accordingly, some harmful influence such as colour deviation may occur in the reproduced image. Furthermore, in conversion of the 4:2:2 format into the NTSC format as shown in Fig. 3, there may arise a problem of some group delay between the luminance signal and the colour difference signal of the input digital component signal due to the influence from the video signal processing characteristics and the recording and reproducing characteristics. With regard to such group delay discrepancy also, some harmful influence may be exerted on the image if the correction is performed merely per sampling period since the error is not so much diminished as to be permissible.

Document US-A-4,460,890 describes a digital sampling rate converter, in which input signals are digitally oversampled and interpolated at an output rate. The preamble of claim 1 is based upon the disclosure of this document.

Therefore it is an object of the present invention to provide a sampling frequency converter for use in a format conversion apparatus which overcomes the afore-mentioned drawbacks and disadvantages observed in the prior art.

Another object of the invention is to provide a sampling frequency converter of a simplified constitution for use in a format conversion apparatus to process different digital colour television signals.

A further object of the invention is to provide a sampling frequency converter with a high-accuracy interpolating function for use in a format conversion apparatus to process different digital colour television signals.

Various other objects, advantages and features of the present invention will become readily apparent from the ensuing detailed description, and the novel features will be particularly pointed out in the appended claims.

According to an embodiment of the present invention there is provided a sampling frequency converter for converting sampled input data from a signal, and of an input sampling frequency into sampled output data of an output sampling frequency said converter comprising:

over-sampling means supplied with said sampled input data for increasing the sampling frequency of said sampled input data by a factor $\underline{n}$ to provide over-sampled data; and

output data extractor means for periodically extractir data from said over-sampled data in response to a timing pulse having said output sampling frequency; characterised in that said factor n equals the ratio of the least common multiple of the input and output sampling frequencies the input sampling frequency; and by further comprising control means for controlling the phase of said timing pulse to control the group delay of said sampled output data relative to further sample data from said signa passing at the same time through a parallel sampling frequency converter with the same output sampling frequency

Fig. 1 is a block diagram showing a conventional format conversion apparatus designed for converting a composite digital color television signal into component digital color television signals;

Fig. 2 is a diagram useful in understanding the operation of the conventional format conversion apparatus;

Fig. 3 is a block diagram showing another conventional format conversion apparatus designed for converting component digital color television signals into a composite digital color television signal;

Fig. 4 is a block diagram of one embodiment of the frequency converter according to the present invention;

Fig. 5 is a diagram useful in understanding the operation of the embodiment shown in Fig. 4;

Fig. 6 is a block diagram showing an exemplary over-sampling filter employed in the embodiment of Fig. 4;

Fig. 7 is a timing chart useful in understanding the operation of the embodiment shown in Fig. 4;

Fig. 8 is a diagram useful in understanding the operation of the over-sampling filter;

Fig. 9 is a block diagram of another embodiment of the frequency converter according to the present invention;

Fig. 10 is a timing chart useful in understanding the operation of a third embodiment of the invention; and

Figs. 11A and 11B are block diagrams showing a conventional sampling frequency converter and a new one, respectively.

Hereinafter preferred embodiments of the present invention will be described with reference to the accompanying drawings representing a sampling frequency converter for use in a format conversion apparatus designed to convert a digital composite signal (sampling frequency $f_2 = 4f_{sc}$) of the aforementioned NTSC format into digital component signals (sampling frequency $f_1 = 13.5$ MHz) of the D-1 format (4:2:2 format).

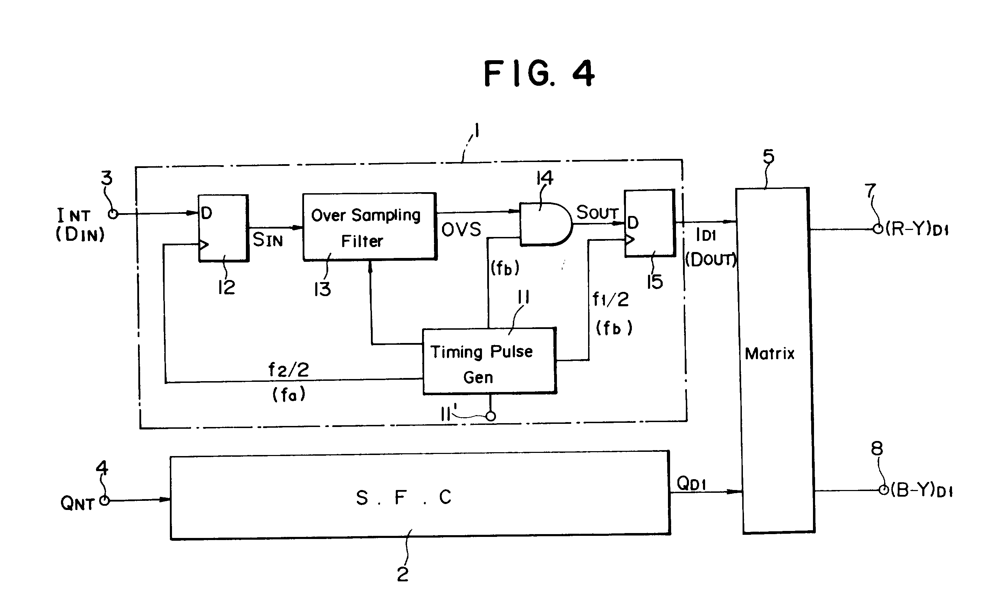

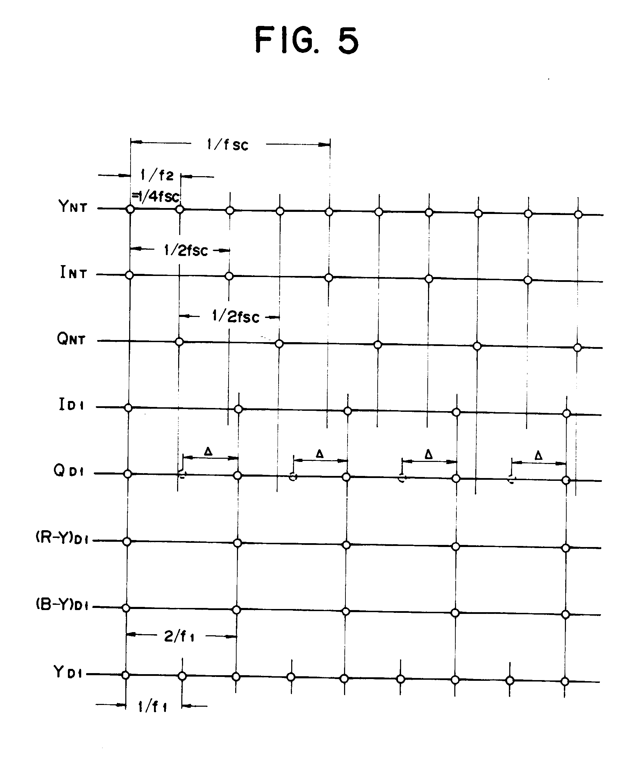

Fig. 4 is a block circuit diagram showing a first embodiment of the sampling frequency converter according to the present invention, wherein two sampling frequency converters 1 and 2 are provided in parallel correspondingly to I and Q signals of the NTSC format. Input terminals 3 and 4 of such sampling frequency converters 1 and 2 are fed with output signals $I_{NT}$ and $Q_{NT}$ of the decoder 107 shown in Fig. 1 (i.e. the signals obtained through I-axis and Q-axis demodulation of the carrier color signal $C_{NT}$ produced by Y/C separation of the digital composite signal). Such signals $I_{NT}$ and $Q_{NT}$ have the same sampling frequency (data rate) of $f_2/2 = 2f_{sc}$ as mentioned previously, and the time difference (offset) between the data of such two signals is $1/f_2 = 1/4f_{sc}$. Fig. 5 shows the timing relationship among the data (denoted by o) of the color difference signals $I_{NT}$, $Q_{NT}$ and the separated luminance signal $Y_{NT}$. Since matrix calculation for conversion of the coordinate axes cannot be executed directly to obtain the R-Y and B-Y signal data and so forth by the use of I and Q signal data having such offset (or phase difference) at the sampling points, it has been customary heretofore to interpolate the center timing data of the I and Q signals by means of interpolation to obtain the signals $If_2$ and $Qf_2$ (shown in Fig. 2) of mutually equal sampling frequencies $f_2 = 4f_{sc}$ with the same sampling points. However, in this embodiment, the conversion is performed by the sampling frequency converters 1 and 2 in a mode where the phase difference (offset) $\Delta$ is included in the timing of the converted output, thereby producing frequency-converted outputs (signals $I_{D1}$ and $Q_{D1}$ in Fig. 5) without causing any time difference (offset) therebetween. The sampling frequency converters 1 and 2 produce an I signal $I_{D1}$ and a Q signal $Q_{D1}$ having a sampling frequency of $f_1/2$ (= 6.75 MHz) and composed of data rows which are coincident in regard to the sampling points. Such signals $I_{D1}$ and $Q_{D1}$ are supplied to a matrix calculator 5 where matrix calculation is executed for converting the coordinates of I and Q axes into those of R-Y and B-Y axes, so that the signals $I_{D1}$ and $Q_{D1}$ are converted respectively into color difference signals $(R-Y)_{D1}$ and $(B-Y)_{D1}$ of the aforementioned D-1 format (4:2:2 format) and then are taken out respectively from output terminals 7 and 8. Therefore, it is not necessary to provide additional interpolators (denoted by 108 and 109 in Fig. 1) differently from the conventional circuit configuration, thereby diminishing the required number of signal processing stages to eventually minimize signal deterioration as well as to simplify the circuit constitution with reduction of the cost.

Now a description will be given on exemplary internal constitutions of the sampling frequency converters 1 and 2. Since these two converters are the same with regard to the constitution, one circuit (e.g. converter 1) will be taken as an example.

In the sampling frequency converter 1, there is incorporated a timing pulse generator 11 for generating various timing pulses. The digital input signal $D_{IN}$ fed to the input terminal 3 is then supplied via a D flip-flop 12 to, for example, an over-sampling filter 13 and is thereby converted into a data row of a frequency $f_s/2$ which is a least common multiple of the sampling frequencies $f_1/2$ and $f_2/2$. In this case, such frequencies $f_1$, $f_2$ and $f_s$ are so determined as to satisfy the following conditions with prime natural numbers $n_1$ and $n_2$ thereof:

$$n_1 f_1 = n_2 f_2 = f_2 = f_s$$

or

$$n_1 f_1/2 = n_2 f_2/2 = f_s/2$$

The relationship between the natural numbers $n_1$ and $n_2$ is expressed as

$$n_1 : n_2 = f_2 : f_1$$

In an exemplary case of conversion between the D-1 format and the NTSC format with $4f_{sc}$ sampling, the actual numerical values of the above natural numbers become as $n_1 = 35$ and $n_2 = 33$, respectively. The data of the signal of the sampling frequency $f_s/2$ obtained from the over-sampling filter 13 is selected at the rate of the sampling frequency $f_1/2$ by a selector gate 14 and then is outputted via a D flip-flop 15. In this circuit, the clock frequency of the D flip-flop 12 on the input side is set to $f_2/2$, and that of the D flip-flop 15 on the output side is set to $f_1/2$. All of such two clock signals, the clock signal fed to the over-sampling filter 13 and the selection signal to the selector gate 14 are outputted from the timing pulse generator 11.

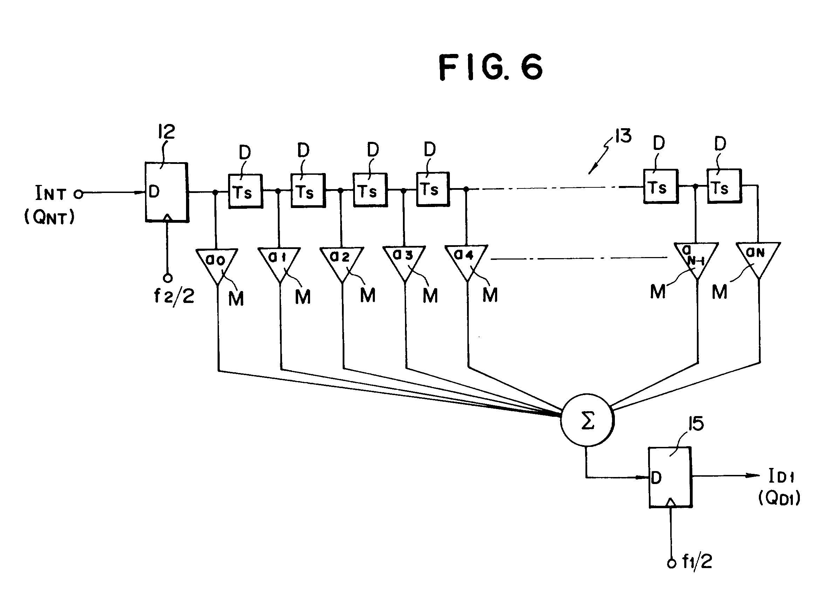

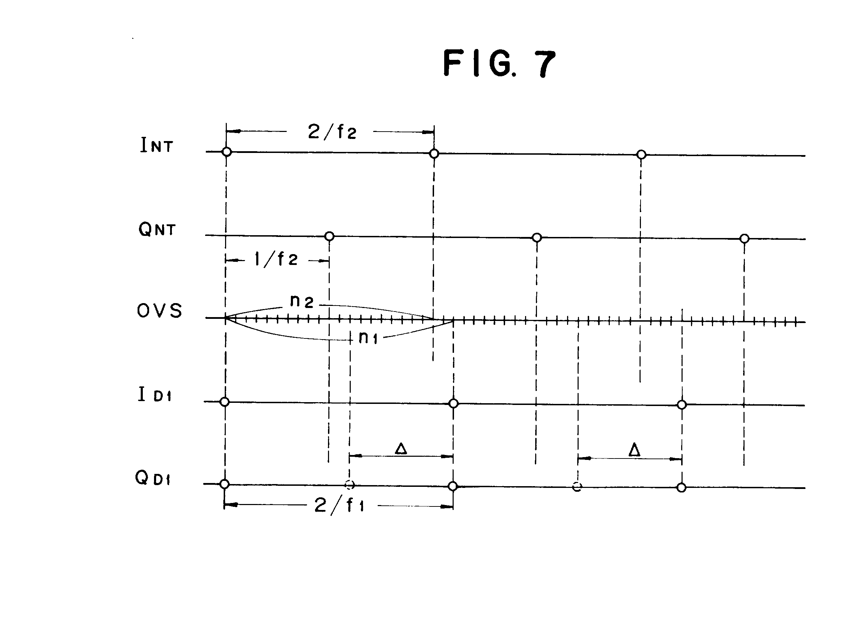

The over-sampling filter 13 may be constituted of a known circuit configuration shown in Fig. 6. The example of Fig. 6 is a non-cyclic of FIR type digital filter, wherein a plurality, e.g. N pieces (N = an integer greater than $n_2$) of delay elements D, ..., D are connected in series to one another, and the outputs from the junctions (N + 1 points including the input and output terminals of such series-connected circuit) of the delay elements are fed to N+1 pieces of coefficient multipliers M, ..., M where the individual signals are multiplied by coefficients $a_0$, $a_1$, ..., $a_N$ respectively. And the resulted multiplied outputs are fed to an adder $\Sigma$ so as to be added to one another. Each of the delay elements D, ..., D has a delay time $T_s$ corresponding to $1/f_s$ (sampling period) which is theoretically a reciprocal of the aforementioned sampling frequency $f_s$. However, it may be set to $2/f_s$ since the sampling frequency of each input and output signals is set to 1/2 ($f_1/2$, $f_2/2$) and the required over-sampling clock frequency is $f_s/2$. The over-sampling filter 13 receives the input signal $I_{NT}$ or $Q_{NT}$ (sampling frequency $f_2/2$) via the D flip-flop 12 and over-samples such signal to produce over-sampled output data at the timing represented by OVS in Fig. 7, i.e. at each sampling point of a frequency $n_2 f_2/2$ ($= f_s/2$). Out of the entirety of such data, the data sampled at the timing of the frequency $f_1/2$ is extracted by the output-side D flip-flop 15 (or the selector gate 14 shown in Fig. 4), whereby a data row of the sampling frequency. $f_1/2$ can be obtained. In this stage, the timing to extract the converted data is shifted in conformity with a predetermined offset $\Delta$ between the I signal and the Q signal, thereby producing a data row at the same sampling points as represented by the signal $I_{D1}$ or $Q_{D1}$ in Fig. 7. In other words, such operation can be performed by generating clock pulses of a common phase from the timing pulse generator 11 in the sampling frequency converters 1, 2 and then controlling the selector gate 14 and the D flip-flop 15 in accordance with such clock pulses.

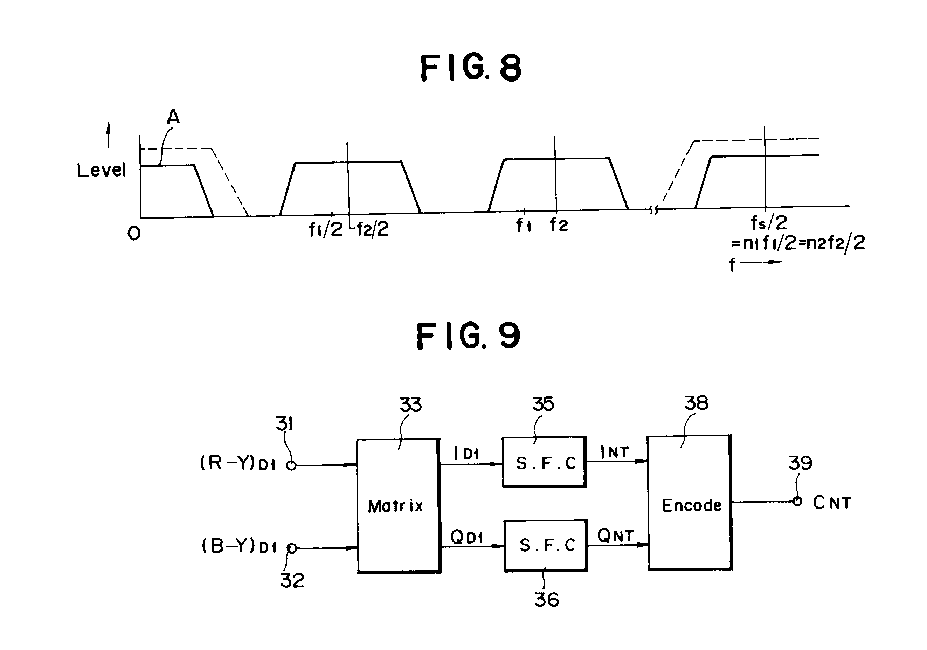

Fig. 8 graphically shows how the over-sampling operation is performed on the axis of frequency. Since the sampling frequency of the input signal $I_{NT}$ or $Q_{NT}$ is $f_2/2$, the spectrum of the frequency becomes such as represented by a solid line in Fig. 8, wherein the spectral component A of the baseband appears in the form of upper and lower sideband components with the center thereof at the position corresponding to an integral multiple of the sampling frequency $f_2/2$. And the over-sampling operation at the $n_2$-fold frequency signifies extraction of the baseband component A and the sideband components whose center is at the position corresponding to an integral multiple of the frequency $n_2 \cdot f_s/2$, as represented by a broken line in Fig. 8. Since such frequency $f_s/2$ is also equivalent to the frequency $n_1 \cdot f_1/2$, extraction of the data at the sampling points of the frequency $f_1/2$ out of the over-sampled data row signifies an operation of obtaining a signal (not shown) composed of the baseband component A and the upper and lower sideband components whose center is at the position corresponding to an integral multiple of the frequency $f_1/2$.

The above-described embodiment represents an exemplary case of applying the sampling frequency converter of the present invention to the stages posterior to the decoder 107 in the constitution of Fig. 1. And in addition, it is also possible to apply the invention to a format conversion apparatus designed to convert component digital signals of the D-1 (4:2:2) format into a composite digital signal of the NTSC format, as shown in Fig. 3. Fig. 9 shows a circuit constitution replaceable with the stages from the input terminals 131 and 132 to the encoder 138 in Fig. 3.

Similarly to the aforementioned input signals 131 and 132 in Fig. 3, input terminals 31 and 32 in Fig. 9 receives the color difference signals of the D-1 format, i.e. the signals $(R-Y)_{D1}$ and $(B-Y)_{D1}$ each having a sampling frequency $f_1/2$. Such input signals are first fed to a matrix calculator 33 so as to be converted respectively into an I signal $I_{D1}$ and a Q signal $Q_{D1}$ of the same frequency $f_1/2$ with coincident sampling points, which are then fed to sampling frequency converters 35 and 36 respectively. Such sampling frequency converters 35 and 36 perform inverse operations with respect to the inputs and outputs of the aforementioned sampling frequency converters 1 and 2 in Fig. 4. That is, in the converters 35 and 36, two data rows of the signals $I_{D1}$ and $Q_{D1}$ having a frequency $f_1/2$ with coincident sampling points are converted into two data rows of signals $I_{NT}$ and $Q_{NT}$ having a frequency $f_2/2$ ($= 2f_{sc}$) with a predetermined offset, delay or phase difference ($1/f_2 = 1/4f_{sc}$) between the respective sampling points. The signals $I_{NT}$ and $Q_{NT}$ are fed to a color encoder 38, which is functionally equal to the aforementioned color encoder 138 in Fig. 3 and executes quadrature two-phase modulation to produce a digital carrier color signal $Q_{NT}$ of the NTSC format at an output terminal 39. It is a matter of course that the digital carrier color signal $C_{NT}$ thus obtained is superposed on a digital luminance signal $Y_{NT}$ converted individually with respect to the sampling frequency thereof, whereby a digital composite signal of the NTSC format is produced.

In the embodiment of Fig. 9 also, similarly to the foregoing embodiment of Fig. 1, the circuit constitution can be simplified to realize reduction of the cost as well as to diminish the required number of signal processing stages to consequently minimize the signal deterioration.

It is to be understood that the present invention is not limited to the above embodiment alone. For example, the specific constitution of the over-sampling filter is not limited merely to the example of Fig. 6, and there may be contrived some modifications such as to change the individual coefficient values of the coefficient multipliers per sampling time for simplifying the constitution, and a cyclic type or IIR digital filter may also be employed. Furthermore, the present invention is applicable not merely to the aforementioned format conversion alone, but also to a variety of sampling frequency conversions performed while retaining a time difference (phase delay) between two or more digital signals. It is a matter of course that, in addition to the above, various modifications and changes may be contrived within the scope not departing from he spirit of the present invention.

According to the sampling frequency converter of the present invention, the frequency conversion is so executed that a predetermined time delay is caused in the input and output timing for frequency conversion of the first digital signal as compared with the input and output timing for frequency conversion of the second digital signal, so that an interpolation can be performed simultaneously with the sampling frequency conversion, hence eliminating the necessity of individually providing interpolators and sampling frequency converters to consequently attain prevention of signal deterioration as well as to simplify the circuit constitution.

Referring now to another embodiment of Fig. 4, a description will be given on a control method for compensation of the relative group delay difference between a luminance signal line ($Y_{NT}$) and a chrominance signal line ($C_{NT}$).

In this example, a delay control signal is supplied via an input terminal 11′ to a timing pulse generator 11 which is incorporated in a luminance-signal sampling frequency converter (corresponding to 103 in Fig. 1) or I-signal and Q-signal sampling frequency converters 1 and 2, and either the timing of a selection signal to a selector gate 14 or the phase of a clock signal to a D flip-flop 15 is controlled in accordance with such delay control signal.

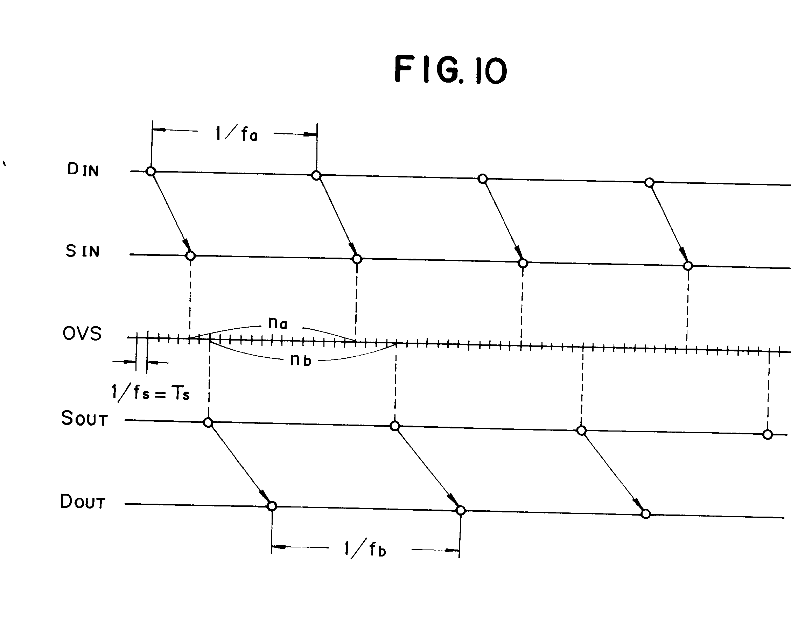

In Fig. 4, the input digital signal $D_{IN}$ fed to the input t erminal 3 has a sampling frequency $f_a$ as shown in Fig. 10. Here, the data $D_{IN}$ is not limited to the signal $I_{NT}$ alone and is used as a general term to represent an input digital signal such as $Q_{NT}$ or $Y_{NT}$. The signal $D_{IN}$ is supplied to a D flip-flop 12, which is then latched by the clock pulse of a frequency $f_a$ fed from the timing pulse generation 11 thereto, whereby a signal $S_{IN}$ is obtained. The signal $S_{IN}$ is somewhat delayed from the input digital signal $D_{IN}$ as shown in Fig. 3. Such signal $S_{IN}$ is supplied to an over-sampling filter 13, so that an output signal OVS (Fig. 10) is obtained from the filter 13 at each sampling point of the over-sampling frequency $f_s$, i.e. per period $T_s$.

And desired data is selectively extracted therefrom per sampling point of the period $1/f_b$ by the selector gate 14, so that a signal $S_{OUT}$ is produced. Such data extraction timing is controlled in accordance with the delay control signal introduced via the input terminal 11′, thereby controlling the group delay amount of the signal. The timing to provide each data of the final output signal $D_{OUT}$ from the sampling frequency converter is determined by the output-side D flip-flop 15, and the delay amount between the signals $S_{OUT}$ and $D_{OUT}$ is varied in accordance with the output phase change in each data of the signal $S_{OUT}$. The adjustment of the delay amount is controllable at a unitary over-sampling period $1/f_s$ as is obvious also from Fig. 10, and therefore the control precision can be enhanced $n_b$ times in comparison with the prior art. Accordingly, when the above embodiment is applied to the sampling frequency converters 103, 111 and 112 for the aforementioned format conversion apparatus of Fig. 1, the group delay correction error between the luminance signal and the color difference signal can be restricted to a maximum of about ±1.05 ns, and the error of such extent exerts no harmful influence on the reproduced image at all.

For executing desired interpolation with a predetermined accuracy in the exemplary constitution of the over-sampling filter shown in Fig. 6, the required number of delay stages D exceeds 100 to consequently bring about the necessity of an equal great number of multipliers M, hence causing a disadvantage that the practical constitution is rendered extremely bulky.

The aforementioned embodiment of Fig. 4 is so contrived that matrix calculation is executed to form R-Y and B-Y signals after the sampling frequency of the I and Q signals is converted. However, at the time of such sampling frequency conversion, it is rendered possible to directly form R-Y and B-Y signals by converting the sample phase without the necessity of any matrix calculation. This technique will now be described below with reference to an embodiment realized by employing a novel over-sampling filter of a simple structure which is capable of eliminating the drawbacks observed in the aforementioned over-sampling filter.

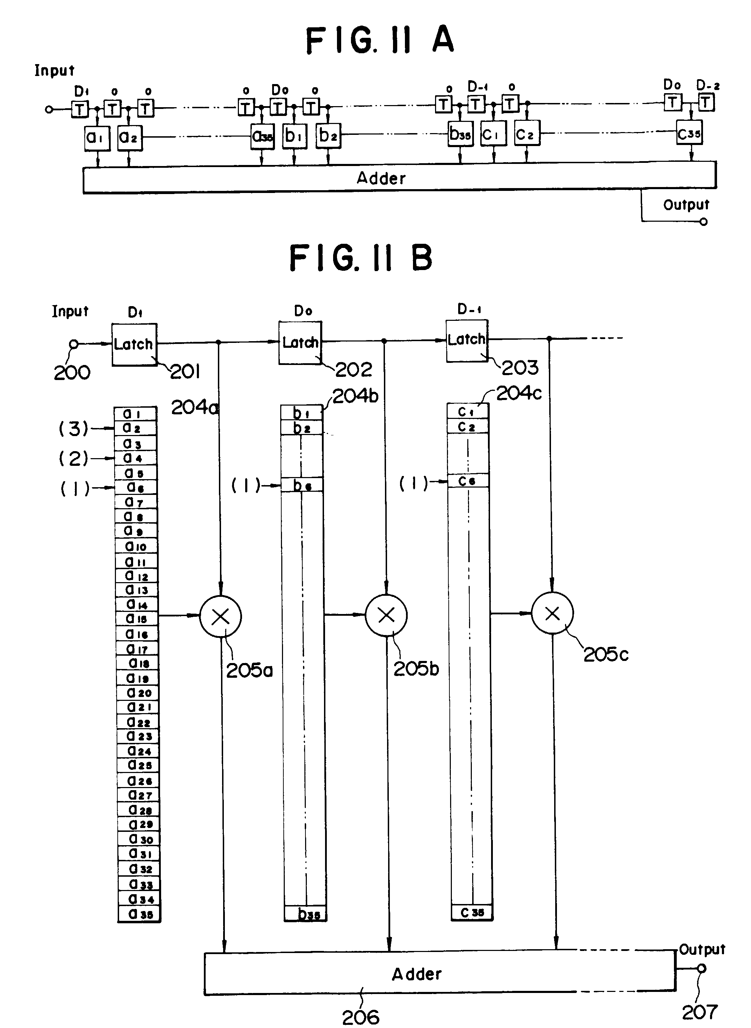

Fig. 11A shows the constitution of a conventional over-sampling filter used to convert a chrominance signal $(R-Y)_{D1}$ or $(B-Y)_{D1}$ of the D1 format having a sampling frequency 6.75 MHz into an $I_{NT}$ or $Q_{NT}$ signal of the NTSC format. The chrominance signal $(R-Y)_{D1}$ or $(B-Y)_{D1}$ having a sampling frequency 6.75 MHz is supplied to an input terminal. In series to the input terminal, there are connected a required number of delay circuits T each having a delay time corresponding to one period of a frequency 35 x 6.75 MHz. The number of such delay circuits T is at least 35 and is dependent on the precision of interpolation. That is, the interpolation accuracy is enhanced with increase of the number of such delay cir-

cuits T. And multipliers $a_1$, $a_2$...$a_{35}$, $b_1$, $b_2$ and so forth are connected to the outputs of the delay circuits T respectively for multiplying individual coefficients $a_1$, $a_2$... $a_{35}$, $b_1$, $b_2$ and so forth. The outputs of such multipliers are supplied to an adder, where the entire multiplied outputs are added to one another. Consequently, the adder provides, from its output terminal, an over-sampled digital signal whose frequency is 35 times the frequency 6.75 MHz of the input digital signal.

Therefore, R-Y and B-Y signals converted with regard to the sampling frequency can be obtained by extracting the output of the adder at a frequency of $2f_{sc}$, but there arises a disadvantage in practical use that the numbers of required delay circuits T and multipliers amount to great values as mentioned above in connection with the conventional example. Since the frequency of the input digital signal is 6.76 MHz as shown also in Fig. 11A, it is considered that the signal is existent merely in one of the 35 delay circuits at a certain timing, while 0 signals are existent equivalently in the outputs of the other delay circuits. Therefore, if such outputs are multiplied by any coefficient, the multiplied outputs become 0 so that, in view of the adder output, the result is equal to that there are none of the outputs from the multipliers.

The following embodiment has been accomplished in consideration of the points mentioned above. And its feature resides in omitting multipliers which multiply 0 by the coefficients, and also omitting any unrequired delay circuits.

The constitution of this embodiment is shown in Fig. 11B, wherein a digital signal fed to an input terminal 200 is $(R-Y)_{D1}$ or $(B-Y)_{D1}$ signal having a sampling frequency of 6.75 MHz as in the foregoing embodiment. When such input digital signal is supplied to a latch circuit 201, the data thereof is held during one period of the sampling frequency 6.75 MHz of the input digital signal. In other words, the latch circuit 201 continuously provides output data $D_1$, for example, during such one period. Similarly, the next-stage latch circuit 202 provides output data $D_0$ anterior to the foregoing data $D_1$ by one sample, and thereafter the next latch circuit 203 provides output data $D_{-1}$ further anterior to the data $D_0$ by one sample.

A ROM 204a connected in relation to the output of the latch circuit 201 sequentially stores, at predetermined addresses therein, coefficient data corresponding to $a_1$, $a_2$...$a_{35}$ shown in Fig. 11A. Similarly a ROM 204b connected in relation to the output of the latch circuit 202 sequentially stores, at predetermined addresses therein, coefficient data corresponding to $b_1$, $b_2$...$b_{35}$ shown in Fig. 11A. Furthermore, a ROM 204c connected in relation to the output of the latch circuit 203 stores the data of coefficients $c_1$, $c_2$... $c_{35}$ of multipliers (not shown in Fig. 11A) provided in connection to the ROM 204c.

It is obvious that the interpolation accuracy can be further enhanced to meet the requirements by additionally providing similar circuits 204d, 204e and so forth.

And for obtaining an output equivalent to that shown in Fig. 11A, the coefficient data are sequentially read out from the ROMs 204a, 204b, 204c per period of a frequency, which is 35 times the sampling frequency 6.75 MHz of the input digital signal, in response to the outputs of the individual latch circuits, then the coefficients thus read out are multiplied in the multipliers 205a, 205b, 205c, and the results of such multiplications are added to one another in the adder 206, whereby the data over-samples at the frequency of 35 x 6.75 MHz is obtained from the output terminal 207. Due to the constituion of Fig. 11B, the numbers of at least the delay circuits and the multipliers can be reduced to about 1/35 as compared with those in the constitution of the conventional over-sampling filter shown in Fig. 11A, thereby achieving considerable simplification of the adder constitution as well.

Generally a phase offset of about 33° is existent between the R-Y/B-Y axis and the I/Q axis with respect to the frequency of the color subcarrier. Therefore, for correction of the level offset corresponding to such phase offset in the embodiment of Fig. 4, the frequency-converted $I_{D1}$ and $Q_{D1}$ signals are fed to a matrix circuit 5 so as to obtain R-Y and B-Y signals of predetermined levels. In the example which will be described below, the sampling phase is controlled for removal of the phase offset without using the aforementioned matrix circuit 5.

The above-described phase offset is $= \frac{33}{360} = \frac{11}{120}$. Thus, in case one wave length of the color subcarrier is divided into 120 equal parts, the offset corresponds to a point spaced apart by 11 parts. And in the double color subcarrier, the offset corresponds to a point spaced apart by 11 parts when one wave length is divided into 60 equal parts. Due to the above over-sampling operation, there is obtained a signal of 33-fold frequency of the double color subcarrier ($2f_{sc}$), whereby it is rendered equivalent to that the data is extracted at each of the equally divided 33 parts of the double color subcarrier.

Here, a consideration will be given on how to find that the phase difference of $\frac{11}{60}$ corresponds to which of the equally divided 33 parts of the double color subcarrier. This case conforms to a calculation of an integer N under the condition of $\frac{11}{60} \fallingdotseq \frac{N}{33}$. Supposing now N = 6,

$$\frac{11}{30} = 0.183...; \frac{12}{33} = 0.181...$$

It signifies that the error between them becomes less than $\frac{1}{100}$ as compared with $\frac{11}{60}$. The error is expressed as

$$\frac{1}{7.16\text{MHz}} \times \frac{11}{60} \times \frac{1}{100} = 0.3 \text{ nsec}$$

Thus, its value is so small as to be completely negligible in practical use.

In the apparatus of Fig. 11B, the coefficients $a_6$, $b_6$, $c_6$ and so forth are selectively read out from the 6th addresses in the ROMs 204a, 204b, 204c ... at the sampling timing of the first color subcarrier wave posterior to one horizontal synchronizing signal, and the outputs of the latch circuits 201, 202, 203 multiplied by such coefficients are added to one another. And after the lapse of 33 periods of the sampling frequency 35 x 6.75 MHz, the coefficients spaced apart by 33 addresses are read out and used for multiplication, thereby producing a signal whose sampling phase is shifted with the rate conversion.

Since the 33 periods of the sampling frequency 35 x 6.75 MHz are substantially equal to the period of $2f_{sc}$, it follows that multiplication of the coefficient per 33 periods corresponds exactly to periodic multiplication of the coefficient and extraction of the signal per period of $2f_{sc}$, whereby the sampling frequency conversion is achieved.

According to the apparatus mentioned above, both the sampling rate conversion and the sampling phase shift can be performed simultaneously at the time of format conversion of the digital video signals, hence attaining satisfactory conversion in the simplified constitution.

For converting a digital composite video signal of the NTSC format into digital component signals of another format, the above apparatus may be so formed as to perform an inverse operation. In such a case, an input composite digital signal is introduced to a separator which separates the input signal into a luminance signal Y and I/Q axis signals, and such signals are then supplied to a matrix circuit to produce a luminance signal Y and two color difference signals R-Y and B-Y. Subsequently the signals thus obtained are fed to data latch circuits, multipliers, ROMs and an adder to execute both rate conversion and shift of the sampling axis, thereby forming digital video signals of the component format.

It is to be understood that the above-described embodiment is applicable also to conversion between the digital video signal of the composite format conforming with the PAL system and the video signal of the component (D-1) format, although the constitution thereof is rendered somewhat complicated.

## Claims

1. A sampling frequency converter (1,2;35,36) for converting sampled input data ($S_t$,) from a signal, and of an input sampling frequency (fa) into sampled output data ($S_{OUT}$) of an output sampling frequency (fb), said converter comprising:

   over-sampling means (13) supplied with said sampled input data ($S_{IN}$) for increasing the sampling frequency of said sampled input data ($S_{IN}$) by a factor $\underline{n}$ to provide over-sampled data (OVS); and
   output data extractor means (11,14,15) for periodically extracting data from said over-sampled data (OVS) in response to a timing pulse having said output sampling frequency (fb);

   characterised in that

said factor n equals the ratio of the least common multiple of the input and output sampling frequencies (fa,fb) to the input sampling frequency (fa); and by further comprising
control means (11) for controlling the phase of said timing pulse to control the group delay of said sampled output data ($S_{OUT}$) relative to further sample data from said signal, passing at the same time through a parallel sampling frequency converter with the same output sampling frequency (Fb).

2. A sampling frequency converter according to claim 1, wherein one of said sampled input data ($S_{IN}$) and said sampled output data ($S_{OUT}$) is a digital colour signal (I,Q) conforming with the digital composite colour signal format, and the other is a digital colour signal (R-Y,B-Y) conforming with the digital component signal format.

3. A sampling frequency converter according to claim 1, wherein one of said sampled input data ($S_{IN}$) and said sampled output data ($S_{OUT}$) is a digital luminance signal ($Y_{NT}$) conforming with the digital composite colour signal format, and the other is a digital luminance signal ($Y_{D1}$) conforming with the digital component signal format.

4. A sampling frequency converter according to claim 2 or 3, wherein said control means (11) controls said timing pulse in such a manner that a group delay imparted to said digital luminance signal ($Y_{NT}$,$Y_{D1}$) or colour signal (I,Q,R-Y,B-Y) becomes equal to the delay imparted to a digital colour signal (I,Q,R-Y,B-Y) or luminance signal ($Y_{NT}$,$Y_{D1}$) passing through said parallel path.

5. A sampling frequency converter according to any one of the preceding claims, wherein said over-sampling means (13) includes serially connected latch circuits (201,202,203) supplied with said sampled input data ($S_{IN}$) for latching the same for one sampling period of said sampled input data, multiplier means (205a,205b,205c) connected to the output of each of said latch circuits, ROM means (204a,204b,204c) connected to each of said multiplier means for storing a plurality of coefficient data which are read out sequentially, then supplied to said corresponding multiplier means and multiplied by the output of said latch circuit, and adder means (206) for adding the outputs of said multiplier means together; and said output extractor means includes an address controller (11) for controlling the read address of said ROM means with the frequency corresponding to said output sampling frequency (fb).

**Patentansprüche**

1. Abtastfrequenzkonverter (1, 2; 35, 36) zur Konvergo tierung abgetasteter Eingangsdaten ($S_{IN}$) aus einem Signal mit einer Eingangsabtastfrequenz (fa) in abgetastete Ausgangsdaten ($S_{OUT}$) mit einer Ausgangsabtastfrequenz (fb), wobei der Konverter aufweist:

   eine Überabtasteinrichtung (13), die mit den abgetasteten Eingangsdaten ($S_{IN}$) beliefert wird, um die Abtastfrequenz der abgetasteten Eingangsdaten ($S_{IN}$) um einen Faktor n zu erhöhen, um Überabtastdaten (OVS) bereitzustellen; und
   eine Ausgangsdatenextrahiereinrichtung (11, 14, 15) zur periodischen Extrahierung von Daten aus den überabgetasteten Daten (OVS) in Abhängigkeit von einem Zeittaktimpuls, der die Ausgangsabtastfrequenz (fb) hat;

   **dadurch gekennzeichnet, daß**

   der Faktor n gleich dem Verhältnis des kleinsten gemeinsamen Vielfachen der Eingangs- und Ausgangs-Abtastfrequenzen (fa, fb) in bezug auf die Eingangsabtastfrequenz (fa) ist; und weiter aufweist:
   eine Steuereinrichtung (11) zur Steuerung der Phase des Zeittaktimpulses, um die Verzögerung der Gruppe der abgetasteten Ausgangsdaten ($S_{OUT}$) bezüglich weiterer Abtastdaten aus diesem Signal zu steuern, die im gleichen Zeitpunkt durch einen parallelen Abtastfrequenzkonverter mit der gleichen Ausgangsabtastfrequenz (fb) laufen.

2. Abtastfrequenzkonverter nach Anspruch 1, wobei entweder die abgetasteten Eingangsdaten ($S_{IN}$) oder die abgetasteten Ausgangsdaten ($S_{OUT}$) ein digitales Farbsignal (1, Q) sind, das dem digitalen zusammengesetzten Farbsignalformat entspricht, und die anderen ein digitales Farbsignal (R-Y, B-Y) sind, das dem digitalen Komponenten-Signalformat entspricht.

3. Abtastfrequenzkonverter nach Anspruch 1, wobei entweder die abgetasteten Eingangsdaten ($S_{IN}$) oder die abgetasteten Ausgangsdaten ($S_{OUT}$) ein digitales Luminanzsignal ($Y_{NT}$) sind, die dem digitalen zusammengesetzten Farbsignalformat entsprechen, und die anderen ein digitales Luminanzsignal ($Y_{D1}$) sind, die dem digitalen Komponenten-Signalformat entsprechen.

4. Abtastfrequenzkonverter nach Anspruch 2 oder 3, wobei die Steuereinrichtung (11) den Zeittaktimpuls in einer Weise steuert, daß eine Verzögerung der Gruppe, die dem digitalen Luminanzsignal ($Y_{NT}$, $Y_{D1}$) oder Farbsignal (I, Q, R-Y, B-Y) verliehen wird, gleich der Verzögerung wird, die einem digitalen Farbsignal (I, Q, R-Y, B-Y) oder Luminanzsignal ($Y_{NT}$, $Y_{D1}$), welches durch den parallelen Pfad läuft, verliehen wird.

5. Abtastfrequenzkonverter nach einem der vorhergehenden Ansprüche, wobei die Überabtasteinrichtung (13) seriell geschaltete Latchschaltungen (201, 202, 203) besitzt, die mit den abgetasteten Eingangsdaten ($s_{IN}$) beliefert werden, um diese für eine Abtastperiode der abgetasteten Eingangsdaten zu speichern, Multipliziereinrichtungen (205a, 205b, 205c), die mit dem Ausgang einer jeden der Latchschaltungen verbunden sind, ROM-Einrichtungen (204a, 204b, 204c), die mit jeder der Multipliziereinrichtungen verbunden sind, um mehrere Koeffizientendaten, welche sequentiell gelesen werden, zu speichern, die dann zu der entsprechenden Multipliziereinrichtung geliefert und mit dem Ausgangssignal der Latchschaltung multipliziert werden, und eine Addiereinrichtung (206), um die Ausgangssignale der Multipliziereinrichtungen miteinander zu addieren; und wobei die Ausgangsextra-hiereinrichtung eine Adreßsteuerung (11) besitzt, um die Leseadresse der ROM-Einrichtung mit der Frequenz entsprechend der Ausgangsabtastfreguenz (fb) zu steuern.

**Revendications**

1. Convertisseur de fréquence d'échantillonnage (1, 2 ; 35, 36) pour convertir une donnée d'entrée échantillonnée ($S_{IN}$) issue d'un signal, et d'une fréquence d'échantillonnage d'entrée (fa), en une donnée de sortie échantillonnée ($S_{OUT}$), d'une fréquence d'échantillonnage de sortie (fb), ledit convertisseur comprenant :

   un moyen de suréchantillonnage (13) alimenté avec ladite donnée d'entrée échantillonnée ($S_{IN}$) pour augmenter, d'un facteur n, la fréquence d'échantillonnage de ladite donnée d'entrée échantillonnée ($S_{IN}$), pour fournir une donnée suréchantillonnée (OVS) ; et
   un moyen extracteur de donnée de sortie (11, 14, 15) pour extraire périodiquement une donnée de ladite donnée suréchantillonnée (OVS) en réponse à une impulsion de cadencement ayant ladite fréquence d'échantillonnage de sortie (fb) ; caractérisé en ce que :
   ledit facteur n est égal au rapport du plus petit commun multiple des fréquences d'échantillonnage d'entrée et de sortie (fa, fb) à la fréquence d'échantillonnage d'entrée (fa) ; et en ce qu'il comprend, en outre :

un moyen de commande (11) pour commander la phase de ladite impulsion de cadencement pour commander le retard de groupe de ladite donnée de sortie échantillonnée ($S_{OUT}$) par rapport à une donnée échantillonnée supplémentaire issue dudit signal, passant en même temps à travers un convertisseur de fréquence d'échantillonnage parallèle avec la même fréquence d'échantillonnage de sortie (fb).

2. Convertisseur de fréquence d'échantillonnage selon la revendication 1, dans lequel l'une de ladite donnée d'entrée échantillonnée ($S_{IN}$) et de ladite donnée de sortie échantillonnée ($S_{OUT}$) est un signal de couleur numérique ($I_Q$) conforme au format de signal de couleur composite numérique, et l'autre est un signal de couleur numérique (R-Y, B-Y) conforme au format de signal des composantes numériques.

3. Convertisseur de fréquence d'échantillonnage selon la revendication 1, dans lequel l'une de ladite donnée d'entrée échantillonnée ($S_{IN}$) et de ladite donnée de sortie échantillonnée ($S_{OUT}$) est un signal de luminance numérique ($Y_{NT}$) conforme au format de signal de couleur composite numérique, et l'autre est un signal de luminance numérique ($Y_{D1}$) conforme au format de signal des composantes numériques.

4. Convertisseur de fréquence d'échantillonnage selon la revendication 2 ou 3, dans lequel ledit moyen de commande (11) commande ladite impulsion de cadencement de manière telle que le retard de groupe imposé audit signal de luminance numérique ($Y_{NT}$, $Y_{D1}$) du signal de couleur (I, Q, R-Y, B-Y) devienne égal au retard imposé à un signal de couleur numérique (I, Q, R-Y, B-Y) ou un signal de luminance ($Y_{NT}$, $Y_{D1}$) passant par ledit trajet parallèle.

5. Convertisseur de fréquence d'échantillonnage selon l'une quelconque des revendications précédentes, dans lequel ledit moyen de suréchantillonnage (13) comprend : des circuits verrous (201, 202, 203) connectés en série, alimentés avec ladite donnée d'entrée échantillonnée ($S_{IN}$) pour les verrouiller pendant une période d'échantillonnage de ladite donnée d'entrée échantillonnée ; un moyen multiplieur (205a, 205b, 205c) connecté à la sortie de chacun desdits circuits verrous ; un moyen formant ROM (mémoire morte) (204a, 204b, 204c) connecté à chacun desdits moyens multiplieurs pour mémoriser plusieurs données de coefficients qui sont lues de manière séquentielle, qui sont ensuite délivrées auxdits moyens multiplieurs correspondants et qui sont multipliées par la sortie dudit circuit verrou ; et un moyen additionneur (206) pour additionner les sorties desdits moyens multiplieurs les unes aux autres ; et dans lequel ledit moyen extracteur de sortie comprend un régisseur d'adresse (11) pour commander l'adresse lue dudit moyen formant ROM avec la fréquence correspondant à ladite fréquence d'échantillonnage de sortie (fb).

# FIG. 1

# FIG. 2

# FIG. 3

# FIG. 4

EP 0 336 669 B1

# FIG. 5

FIG.6

# FIG. 7

EP 0 336 669 B1

## FIG. 8

## FIG. 9

18

# FIG. 10

EP 0 336 669 B1

# FIG. II A

# FIG. II B